# EUROPEAN PATENT APPLICATION

(11) **EP 2 645 634 A1**
(43) Date of publication of application: **02.10.2013**
(21) Application number: 12290103.6
(22) Date of filing: 27.03.2012
(51) Int. Cl.: H04L 12/26

(54) **PLC network topology extraction method using node-to-node transfer functions**

(71) Applicant: Alcatel Lucent, 75007 Paris (FR)
(72) Inventor: Dardenne, Xavier, 1390 Grez-Doiceau (BE); Drooghaag, Benoit, 1421 Ophain-Bois-Seigneur-Isaac (BE)
(74) Representative: Wetzel, Emmanuelle

(57) **Abstract**

A home network topology identification method, wherein the home network (13) has at least two connected network devices, and wherein the home network topology is unambiguously defined by a set of network topology parameters, the method comprising the following steps:
(1a) conduct transfer function measurements of all possible pairs of connected network devices to obtain a set of measured transfer functions;
(1b) define initial values for each network topology parameter of an estimated set of network topology parameters to establish an estimated network topology;
(1c) calculate a set of estimated transfer functions of all possible pairs of connected network devices from the estimated set of network topology parameters;
(1d) compare the set of estimated transfer functions and the set of measured transfer functions by applying a metric function to obtain a measure of difference;
(1e) apply a pre-determined criterion on the obtained measure of difference;
(1f) adapt at least one network topology parameter of the estimated set of network topology parameters if the obtained measure of difference fails to fulfill the pre-determined criterion; and
(1g) repeat steps (1c) to (1e) until one of the obtained measures of difference meets the pre-determined criterion.

## Description

The invention relates to a home network topology identification method and a management center device provided to carry out the method.

### BACKGROUND ART

Recent years have seen an increasing interest in home network technologies which are used primarily for the deployment of small communication networks in private houses. These home networks can be used to connect various devices located in different parts of the house. For instance, a residential gateway (like a modem), providing internet access to a customer, can broadcast internet and/or television signals all over the house.

In case of communication issues between devices, diagnostic and troubleshooting can be very difficult because of a high complexity of the communication channel. Classical diagnostic methods used on point-to-point wire line communication systems such as xDSL (Digital Subscriber Line technologies) are not easily applicable to point-to-multipoint network channels. Indeed, these methods usually rely on the measurement of signal attenuation, directly related to distance between transceivers, and on reflectometry techniques (Time-Domain Reflectometry - TDR, or Frequency-Domain Reflectometry - FDR), typically used also to estimate distances as well as to detect defects on the physical channel by analyzing abnormal signal reflections.

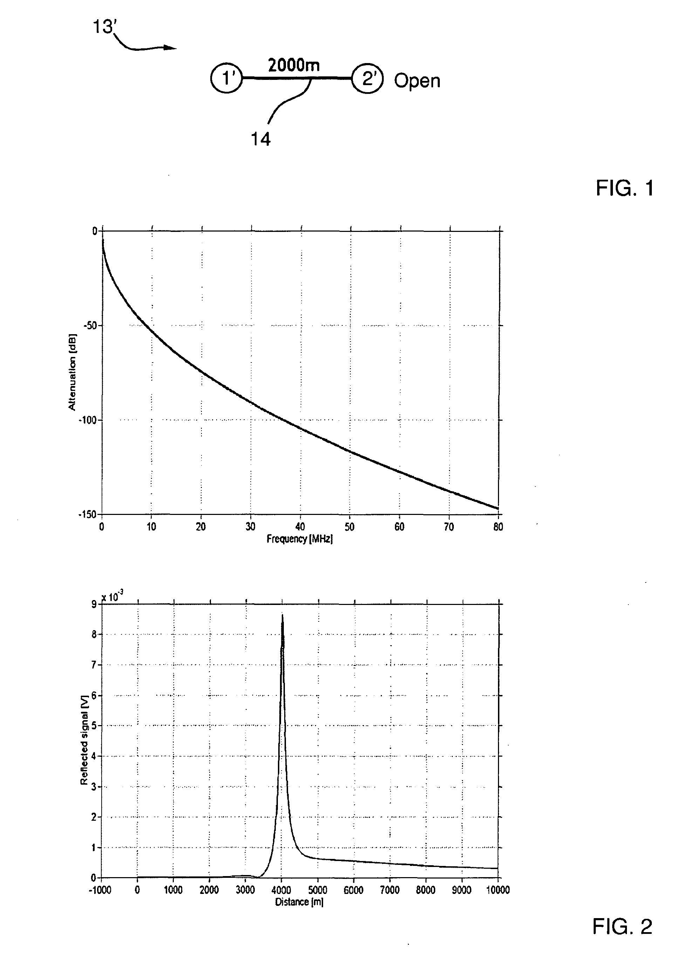

To further illustrate the problem, examples corresponding to quite simple home networks are described in Fig. 1 - 4. Fig. 1 schematically depicts a home network 13' formed by a typical clean xDSL (Digital Subscriber Line technologies) line comprising two nodes 1', 2'. A corresponding home network topology comprises the two nodes 1', 2' that represent line ends and one branch 14 connecting these nodes 1', 2', representing the actual line having a line length.

In an upper part, Fig. 2 shows a transfer function between the two nodes 1', 2' of the xDSL line of Fig. 1, and also a time domain reflectogram from node 1' (lower part of Fig. 2). For this quite simple case, it is obvious that the topology can be easily extracted from the reflectogram. The peak at 4000 m corresponds to a total distance traveled by a signal from node 1' to node 2' and then being reflected back to node 1'. As only one reflection is obtained, it is easy to deduce that this home network 13' consists of a single line of 2000 m length. Moreover, the attenuation shown in the transfer function has a smooth curvature and could therefore also be used to estimate the line length, as is obvious to the one of skills in the art.

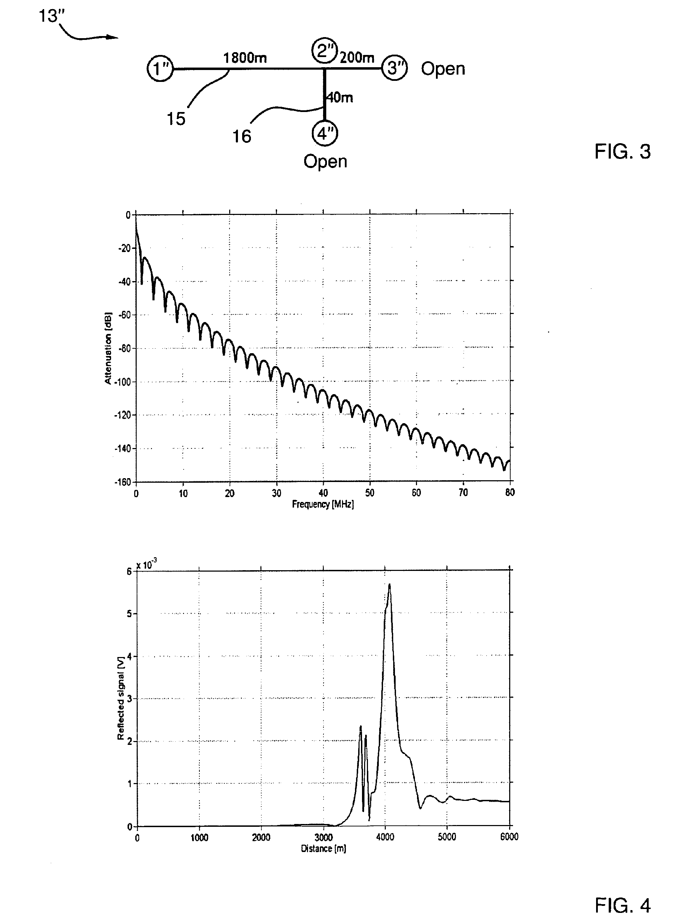

Fig. 3 schematically depicts a second home network 13" designed as a typical xDSL line with a 40 m long bridged-tap 16 located at a distance of 200 m from an end of the line. The xDSL line therefore comprises four nodes 1 "-4". Fig. 4 shows the corresponding transfer function between node 1" and node 3" (upper part) and a time domain reflectogram from node 1" (lower part). The transfer function exhibits typical oscillations caused by interference between a direct signal and signals reflected by the bridged-tap 16, but its envelope is still smooth and useable for an estimation of a line length. The reflectogram clearly shows these reflections and is still simple enough to be analyzed by algorithms known to the one of skills in the art, such as single ended line test (SELT-P), in order to extract the home network topology.

However, when considering more complex topologies, such as in particular Power Line Communication (PLC) networks including a large number of nodes and branches, available solutions are totally inefficient because of the much more complex transfer function patterns and the huge number of reflections occurring in all the branches of the network.

Presently, manual on-site identification of a home network topology is the only way to provide an accurate solution. From a service operator perspective, this solution is costly and not practical at all. Solutions have been suggested for remote diagnostics and troubleshooting, in which particular problems are identified from collected network parameters and actions are recommended to resolve any issues. However, these solutions cannot identify the home network topology structure.

It is therefore a desire to provide a method that allows to effectively determine a complex home network topology, in particular a PLC home network.

### DESCRIPTION

According to an exemplary embodiment of a home network topology identification method, wherein the home network has at least two connected network devices, and wherein the home network topology is unambiguously defined by a set of network topology parameters, the method comprises the following steps:
(a) conduct transfer function measurements between all possible pairs of connected network devices to obtain a set of measured transfer functions;
(b) define initial values for each network topology parameter of an estimated set of network topology parameters to establish an estimated network topology;
(c) calculate a set of estimated transfer functions between all possible pairs of connected network devices from the estimated set of network topology parameters;
(d) compare the set of estimated transfer functions and the set of measured transfer functions by applying a metric function to obtain a measure of difference;
(e) apply a pre-determined criterion on the obtained measure of difference;
(f) adapt at least one network topology parameter of the estimated set of network topology parameters if the obtained measure of difference fails to fulfill the pre-determined criterion; and
(g) repeat steps (c) to (e) until the obtained measure of difference meets the pre-determined criterion.

For N connected network devices, the number of transfer function measurements to determine the set of measured transfer functions is N x (N-1) / 2.

The initial values defined for each network topology parameter may be based on assumptions on network topology parameters, such as a number of nodes in the home network, boundaries for a length of branches between the nodes, termination impedance connected to each electrical outlet, or any other topology parameter that appears as suitable to the one of skills in the art. A priori knowledge on the network topology can be collected in step (b). The more a priori known information is available, the faster the method and the more accurate a solution will be. Then, randomly chosen values within pre-defined realistic boundaries can be assigned to all remaining unknown parameters of the set of network topology parameters.

Preferably, the metric function that is applied to compare the set of estimated transfer functions and the set of measured transfer functions is based on a mean-squared error of the set of estimated transfer functions, taken as an estimator to the set of measured transfer functions.

The method can allow for effective extracting of the whole home network topology, even in cases of complex transfer functions. The knowledge of the home network topology is of prime importance and can then be used in diagnostic and troubleshooting processes, once it is determined by the method.

In a preferred embodiment, a global optimization scheme is used for adapting at least one network topology parameter of the estimated set of network topology parameters in step (f). Preferably, the global optimization scheme is one that is selected from a group of global optimization schemes consisting of evolutionary algorithms, differential evolution, simulated annealing, stochastic tunneling, and Monte Carlo method. In general, it can also be any other global optimization scheme applicable to non-linear optimization problems that appears to be suitable to the one of skills in the art. Thereby, it can be ensured that a minimum of the measure of difference is found, so that at least one set of estimated transfer functions is sufficiently close to the set of measured transfer functions, and the estimated home network topology represents the real home network topology in a sufficient way.

In yet another embodiment, step (a) is carried out by at least one of the connected network devices of any of the possible pairs of connected network devices. By that, the measured transfer functions can be most readily obtained.

In another embodiment, the method is advantageously applied to a home network that substantially is a power line network, and wherein the at least two connected network devices are designed as power line communication (PLC) adapters. The phrase "substantially a power line network", as used in this application, shall be understood particularly as a home network that is based on power line cables, and in which at least 70% of all media that are employed for data transmission within the home network are designed as power line cables. As these are commonly available in homes, the method can be applied to a large percentage of existing home networks. On a PLC channel, many reflections occur at the numerous nodes and terminations (outlets, lamps, ...) of the electric power line network, and interference of all the reflected signals results in complex attenuation patterns, preventing the use of conventional methods like TDR and FDR to accurately estimate distances and to extract network topology.

In yet another preferred embodiment, a home network has at least two connected network devices and a residential gateway, wherein a topology of the home network is also unambiguously defined by a set of network topology parameters, and wherein the residential gateway is provided to collect transfer function measurements of all possible pairs of connected network devices to obtain a set of measured transfer functions, and is further provided to carry out steps (b) to (g) of the method. When the residential gateway is linked to a management center, the extracted home network topology can be readily combined in a diagnostic procedure conducted by a management center located on a remote site. By that, the costs of a home network diagnosis can be substantially reduced and the effort of bringing service staff to the site of the home network can be avoided. This can also allow for more frequent analyses of the home network providing an option of preventive maintenance.

In another preferred embodiment, a management center device is provided that is remote from a home network that has at least two connected network devices, wherein a home network topology is unambiguously defined by a set of network topology parameters, and wherein the management center device is provided to collect transfer function measurements of all possible pairs of connected network devices to obtain a set of measured transfer functions and is further provided to carry out steps (b) to (g) of the method described earlier. This can allow for a frequent, automated analysis of the home network at reduced costs and with a high reliability.

In another preferred embodiment, a software module is provided to carry out the steps (b) to (g) of the described method, wherein the steps are converted into a program code that is implementable in and executable by a residential gateway of a home network or by a management center device that is remote from the home network. Thus, a large flexibility for and a wide scope of applying the method can be attained for home network topology identification.

These and other aspects of the invention will be apparent from and elucidated with reference to the embodiments described hereinafter.

### BRIEF DESCRIPTION OF THE DRAWINGS

In the drawings:
Fig. 1 schematically depicts a typical clean xDSL (Digital Subscriber Line) line comprising two nodes,
Fig. 2 shows a transfer function between the two nodes of the xDSL line of Fig. 1 as well as a time domain reflectogram from one node,
Fig. 3 schematically depicts a second typical xDSL line with a bridged-tap,
Fig. 4 shows a transfer function between nodes 1" and 3" of the xDSL line of Fig. 3 as well as a time domain reflectogram from node 1 ",
Fig. 5 shows a flow chart of an embodiment of the home network topology identification method,
Fig. 6 schematically illustrates a home network designed as a power line network with three connected power line communication (PLC) devices,
Fig. 7 shows transfer functions between three pairs of the PLC devices of Fig. 6 and a time domain reflectogram from node 8.

### DETAILED DESCRIPTION

Examples of home networks 13', 13" that are simple enough to extract a home network topology from a transfer function or a reflectogram have already been discussed in the background art section. In the following, the application of an embodiment of the home network topology identification method to a more complex home network will be described.

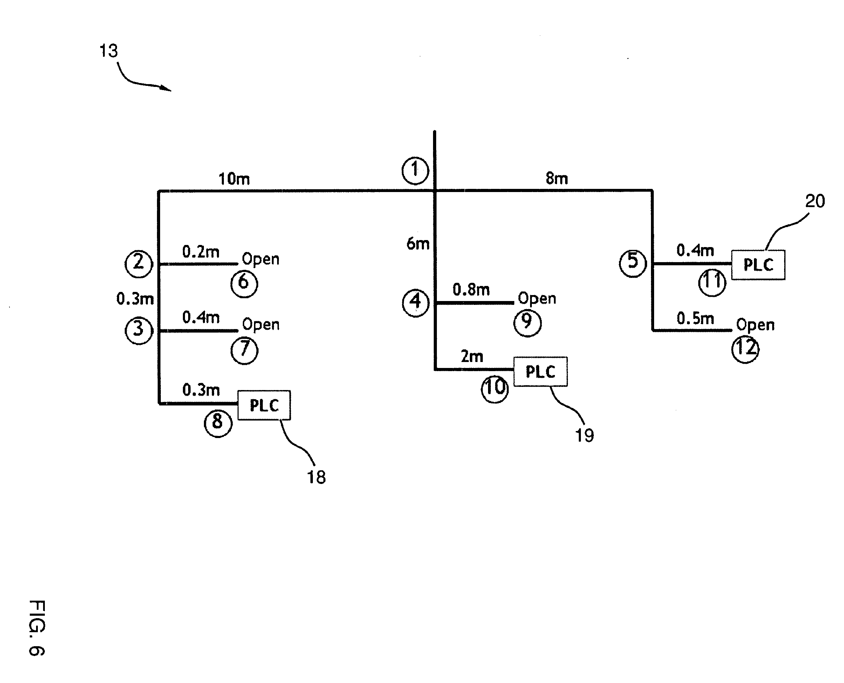

Fig. 6 schematically illustrates another home network 13 designed as a power line network with three connected network devices that are designed as power line communication (PLC) adaptors 18, 19, 20. The home network 13 comprises twelve nodes 1-12 connected by eleven branches. Node 1 is supposed to be an entry point of electrical power to the house, and the three PLC adaptors 18, 19, 20 are supposed to be connected at the nodes 8, 10, and 11. The number of nodes 1-12, the lengths of the branches and their connecting positions form a set of network topology parameters that unambiguously defines the home network topology.

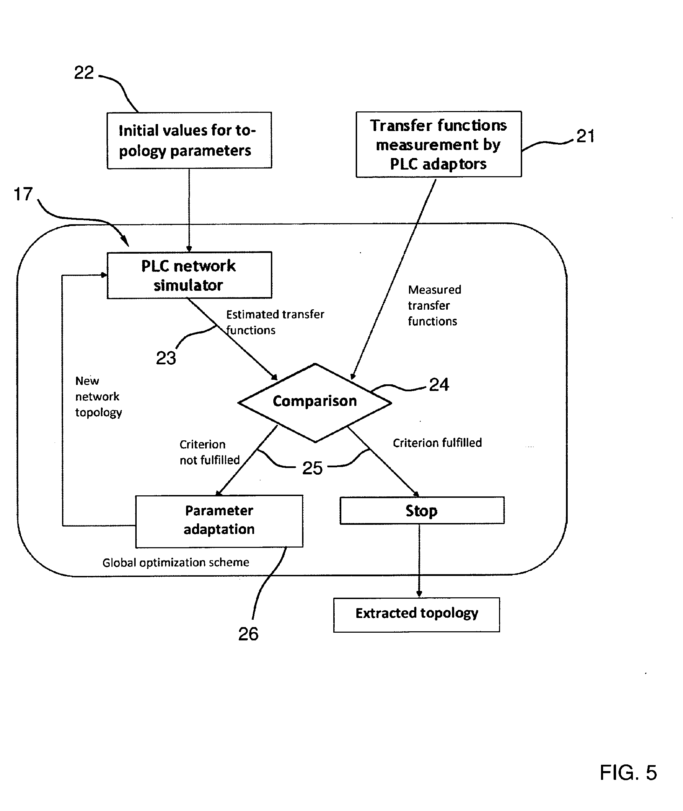

Fig. 5 shows a flow chart of an embodiment of the home network topology identification method applied to the home network 13 of Fig. 6.

As a first input step 21 of the method, transfer function measurements of all three possible pairs (1-2, 1-3, 2-3) of connected network devices designed as PLC adaptors 18, 19, 20 are conducted by at least one of the connected PLC adaptors 18, 19, 20 of any of the possible pairs of PLC adaptors 18, 19, 20 to obtain a set of measured transfer functions.

As a second input step 22 of the method, initial values for each network topology parameter of an estimated set of network topology parameters are defined to establish an estimated network topology. A software module is provided to carry out this step 22 and the next ones described in the following. The steps 22-26 are converted into a program code that is implementable in and executable by a management center device composed of a PLC network simulator 17 that is remote from and connected to the home network 13. In general, the software module could as well be implemented in a residential gateway of the home network 13.

The PLC network simulator 17 is thus provided to collect results of the transfer function measurements of all possible pairs of PLC adaptors 18, 19, 20 to obtain a set of measured transfer functions and is further provided to carry out steps 22-26 of the network topology extraction method.

In a next step 23, the PLC network simulator 17 calculates a set of estimated transfer functions of all possible pairs of connected network devices from the estimated set of network topology parameters.

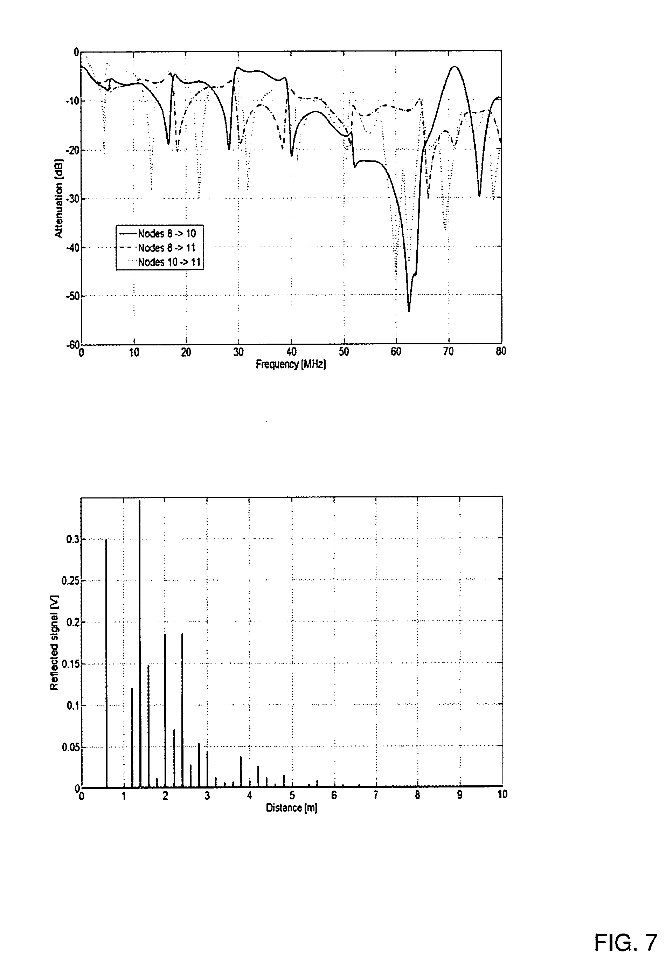

In a following step 24, the PLC network simulator 17 compares the set of estimated transfer functions and the set of measured transfer functions. To this end, the PLC network simulator 17 is provided to apply a metric function to obtain a measure of difference. The metric function consists of a mean square error computation taking the set of estimated transfer functions as estimators and the set of measured transfer functions as "true" values and summing up squared differences between estimated transfer function values and measured transfer function values taken at the same frequency, wherein the summation is done over a frequency range shown in Fig. 7 in equidistant frequency steps.

A pre-determined criterion is stored in a memory unit of the PLC network simulator 17 (not shown). In a next step 25, the PLC network simulator 17 is provided to apply the pre-determined criterion on the obtained measure of difference between the set of estimated transfer functions and the set of measured transfer functions.

If the obtained measure of difference fails to fulfill the pre-determined criterion, the PLC network simulator 17 in another step 26 is provided to adapt at least one network topology parameter of the estimated set of network topology parameters and to reiterate the steps 23-25 of
- calculating a set of estimated transfer functions of all possible pairs of connected network devices from the estimated set of network topology parameters,
- comparing the set of estimated transfer functions and the set of measured transfer functions by applying the metric function to obtain a further measure of difference, and of
- applying the pre-determined criterion on the obtained further measure of difference.

These steps 23-26 are re-iterated by the PLC network simulator 17 until a set of estimated transfer functions is found with an obtained measure of difference that meets the pre-determined criterion. Then the method stops, and the estimated set of network topology parameters that was used to calculate the set of estimated transfer functions of all possible pairs of connected network devices, is considered to represent the set of home network topology parameters, and, by that, an extracted home network topology.

For adapting the at least one network topology parameter of the estimated set of network topology parameters, the PLC network simulator 17 is provided to use a Monte Carlo method that is implemented in the software module, as a global optimization scheme to ensure that an estimated set of network topology parameters will be found such that the pre-determined criterion regarding the obtained measure of difference is fulfilled.

In an upper part, Fig. 7 shows transfer functions between the three possible pairs of the PLC adaptors 18, 19, 20. It is obvious that the transfer functions between nodes 8 to 10, nodes 8 to 11, and nodes 10 to 11 are much more complex here than in the examples given in Figures 2 and 4, and that a straightforward interpretation is completely impossible. However, the topology of the example in Fig. 6 is still quite simple compared to the ones of real home networks. Also, as expected, the simulated reflectogram shown in a lower part of Fig. 7 exhibits a large number of reflections, and it is not possible either to extract the home network topology from it with prior art techniques without ambiguity.

In such cases, the proposed solution permits to extract the home network topology from the three shown transfer functions.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A home network topology identification method, wherein the home network (13) has at least two connected network devices, and wherein the home network topology is unambiguously defined by a set of network topology parameters, the method comprising the following steps:
(1a) conduct transfer function measurements of all possible pairs of connected network devices to obtain a set of measured transfer functions;
(1b) define initial values for each network topology parameter of an estimated set of network topology parameters to establish an estimated network topology;
(1c) calculate a set of estimated transfer functions of all possible pairs of connected network devices from the estimated set of network topology parameters;
(1d) compare the set of estimated transfer functions and the set of measured transfer functions by applying a metric function to obtain a measure of difference;
(1e) apply a pre-determined criterion on the obtained measure of difference;
(1f) adapt at least one network topology parameter of the estimated set of network topology parameters if the obtained measure of difference fails to fulfill the pre-determined criterion; and
(1g) repeat steps (1c) to (1e) until one of the obtained measures of difference meets the pre-determined criterion.

2. The method as claimed in claim 1, wherein for adapting at least one network topology parameter of the estimated set of network topology parameters in step (1f), a global optimization scheme is used.

3. The method as claimed in claim 1 or 2, wherein step (1a) is carried out by at least one of the connected network devices of any of the possible pairs of connected network devices.

4. The method as claimed in one of the preceding claims, wherein the home network (13) substantially is a power line network, and wherein the at least two connected network devices are designed as power line communication adapters (18, 19, 20).

5. A home network (13) having at least two connected network devices and a residential gateway, wherein a home network topology is unambiguously defined by a set of network topology parameters, and wherein the residential gateway is provided to collect transfer function measurements of all possible pairs of connected network devices to obtain a set of measured transfer functions, and is further provided to carry out steps (1b) to (1g) of the method as claimed in claim 1.

6. A management center device that is remote from a home network (13) that has at least two connected network devices, wherein a home network topology is unambiguously defined by a set of network topology parameters, and wherein the management center device is provided to collect transfer function measurements of all possible pairs of connected network devices to obtain a set of measured transfer functions and is further provided to carry out steps (1b) to (1g) of the method as claimed in claim 1.

7. A software module provided to carry out the steps (1b) to (1g) of claim 1, wherein the steps are converted into a program code that is implementable in and executable by a residential gateway of a home network (13) or by a management center device that is remote from the home network (13).
